(19) Europäisches Patentamt
European Patent Office
Office européen des brevets

(11) **EP 3 001 215 A1**

(12) **EUROPEAN PATENT APPLICATION**

(43) Date of publication:
**30.03.2016 Bulletin 2016/13**

(51) Int Cl.:
***G01S 5/02*** *(2006.01)*

(21) Application number: **14306470.7**

(22) Date of filing: **24.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT
92100 Boulogne-Billancourt (FR)**

(72) Inventors:
• **Claussen, Holger
  Dublin, 15 (IE)**
• **Dashit, Marzieh M
  Dublin, 15 (IE)**

(74) Representative: **Mudge, Kevin et al
Bryers LLP
7 Gay Street
Bath BA1 2PH (GB)**

(54) **Method for determining the relative position of user equipment in a wireless telecommunication network, a node and a computer program product**

(57)     A method for determining the relative position of user equipment in a wireless telecommunication network, the method comprising comparing RF fingerprints of respective multiple UEs within a cell of the network to determine a measure of their similarity to one another, and determining co-located UEs within the cell using a similarity metric representing a predetermined similarity threshold to generate a set of co-located UEs with respective RF fingerprints that differ by a factor which is less than the similarity threshold.

FIG. 1

# Description

## TECHNICAL FIELD

Aspects relate, in general, to a method for determining the relative position of user equipment in a wireless telecommunication network, a node and a computer program product.

## BACKGROUND

Co-localization (determining geographical proximity) of people, activities and devices has attracted significant attention due to its numerous applications in areas of social networking, mobile networking, spatial and socio-economics, securing interactions, and so on. Co-location of people can also be interpreted as an indicator for their communications and interactions for example, and this information can be used for many purposes such as to gain understanding of a human's social interactions, re-assigning seats to employees in an office building or re-structuring of business units in an enterprise. Another application is the identification of co-location of user equipment (UE) with a fixed sensor, which allows triggering actions such as access control for doors, mobile payment by swiping the phone over the sensor and so on.

## SUMMARY

According to an example, there is provided a method for determining the relative position of user equipment in a wireless telecommunication network, the method comprising comparing RF fingerprints of respective multiple UEs within a cell of the network to determine a measure of their similarity to one another, and determining co-located UEs within the cell using a similarity metric representing a predetermined similarity threshold to generate a set of co-located UEs with respective RF fingerprints that differ by a factor which is less than the similarity threshold. An RF fingerprint of a UE can be updated periodically by measuring the signal strength at the UE of access points within range of the UE. Respective RF fingerprints can be transmitted to a location server of the network. Such data can be transmitted directly from a UE, or via a node or access point to which the UE in question is coupled. An RF fingerprint can include a timestamp indicating the time at which the fingerprint was created. The time trace of an RF fingerprint representing the period of time that the RF fingerprint is stable or varies within a predetermined range can be determined. Data representing the identity of a UE can be transmitted to at least one co-located UE. An RF fingerprint for a UE can be a vector of scanned access point identifications and associated RF measurements at the UE. Comparing RF fingerprints of respective multiple UEs within a cell of the network to determine a measure of their similarity to one another further can include comparing an RF measurement for a given access point at one UE with a corresponding RF measurement for the access point at another UE to determine a measure for the deviation in the respective measurements from one another. Generating a set of co-located UEs with respective RF fingerprints that differ by a factor which is less than the similarity threshold can include selecting respective pairs of UEs for which the deviation in respective measurements of RF measurements for a given access point is the less or equal to predetermined similarity threshold. An RF fingerprint can include data representing the received signal strength (RSS) at a UE from at least one access point of the network or includes data representing a power delay profile obtained from channel state information. The multiple UEs can be clustered or grouped into clusters of co-located devices.

According to an example, there is provided a node in a wireless telecommunications system including a location server operable to receive RF fingerprint data from multiple UEs within a cell of the system, process the fingerprint data to compare RF fingerprints of respective ones of the multiple UEs to determine a measure of their similarity to one another, and determine co-located UEs within the cell using a similarity metric representing a predetermined similarity threshold to generate a set of co-located UEs with respective RF fingerprints that differ by a factor which is less than the similarity threshold. The location server can determine a time trace of an RF fingerprint representing the period of time that the RF fingerprint is stable or varies within a predetermined range using RF fingerprint timestamps indicating the time at which the fingerprint was created. The node can transmit data to a UE indicating the identity of at least one co-located UE.

According to an example, there is provided a computer program product, comprising a computer usable medium having computer readable program code embodied therein, said computer readable program code adapted to be executed to implement a method for determining the relative position of user equipment in a wireless telecommunication network as provided herein.

## BRIEF DESCRIPTION OF THE DRAWINGS

Embodiments will now be described, by way of example only, with reference to the accompanying drawings, in which:

> Figure 1 is a schematic representation of a wireless telecommunication network according to an example;

> Figure 2 is a flowchart of a method according to an example; and

> Figure 3 is a schematic representation of clusters of users according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Social networks allow people who may not know each other but who share common interests to connect, interact, debate, share, and collaborate. For example, researchers with common interests may connect and discuss via Linkedin (a business-oriented social networking service) or ResearchGate (a social networking site for scientists and researchers) without knowing each other. Even in large organization, people may connect and collaborate via enterprise internal and private social networks without knowing each other by face. But for these people it is likely they meet or coincidentally co-locate for example inside the organization or conferences and so on.

An interesting and useful service can be provided to social network users which notify users that one or more of their collaborators are in proximity of them, such as a few meters apart or in the same room for example. People can voluntarily enroll to receive notification message from a server for example when a person from the same circle of friends, network or professional circle is co-located with them. The server can estimate the room-level co-location of two users and can send a notification message to the users, which can appear on the user's smartphone stating that a collaborator is close by for example.

In big organizations and enterprises, for many business and social reasons, it is of desirable to understand the interactions between different units and employees. For example, considering these interactions, a building can re-structured and redesigned so that units/employees with more interactions co-locate in a room to facilitate their communications/ collaborations and save their time and energy. The need for geographical proximity of units can be fixed or temporarily for certain phases of their interaction. Beside the business reasons, co-location may have social reasons too. For example to encourage a non-social employee to communicate, a seat in a more active area in the building can be assigned to him.

The co-location of employees in company may sometimes negatively effect on social behavior of them. For example, to encourage physical activities at work, employees with more social interaction can be assigned seats far apart from each other to make them walk in workplace.

Localization is determining the geographical position of a node accurately on the surface of earth, i.e., determining a node's location coordinates in a reference system, which can then be displayed on a map for example. A node can represent a person or an object.

Co-localization refers to determining whether a node is located near (geographically proximate to) another node or is far from it. There is no fixed measure of proximity between two nodes with reference to distance; therefore the term co-localization is more ambiguous than the term localization. How near in distance two nodes are considered co-located, depends on the application requirements. For instance, a business may be interested in trading with a co-located supplier a few hundred meters or few kilometers away, whilst to study human's social behavior, people in within a distance of 1-2 meters for example are considered co-located and may have interactions. For mobile payments, a very short distance in the range of 10 cm may be required.

One approach to determine co-location of people is to individually localize them and then compare their location coordinates. However using this approach errors in the location estimation can cause uncertainty in the co-localization. Moreover, estimating the location of people with high accuracy is a computationally complex task which, dependent on the method often requires a calibrated location database (e.g. RF fingerprinting). Localization techniques calculate geographical coordinates of people and determine their locations on a map, which is redundant for co-localization purposes.

To determine co-location, a typical approach is individually localizing UEs using any localization technique, and then comparing their location coordinates. There are several drawbacks to using such localization techniques. For example, any error in location estimation causes an error in the co-localization accuracy, estimating a mobile user's accurate location requires computationally complex approaches such as Location Fingerprinting (LF) for example. Furthermore, localization techniques typically calculate geographical coordinates of a user and display the location on a map. However, location coordinates are redundant for co-localization purposes, and inferring exact location may cause privacy issues. Also, for many co-localization purposes, the location of a significant number of nodes may need to be determined, which can require analyzing measurements from all users in real time. Due to processing, memory and time constraints simultaneously localizing all users is therefore challenging.

According to an example, there is provided an accurate and real-time co-localization technique which provides real-time co-location information with sub-meter accuracy. Such a level of accuracy enables interaction analysis. In an example, co-location is not related or dependent on geographical location, and does not therefore require any time consuming calibration (e.g. RF fingerprint map). Accordingly, co-location of mobile users' can be determined without the need for localizing.

According to an example, co-localization can be performed by collecting periodic measurements of RF fingerprints for mobile devices (or sensors) in a cell of wireless telecommunications network or system. In an example, an RF fingerprint may consist of power measurements to all neighboring cells (in cellular networks this is done as part of the standards for supporting mobility between cells). Optionally these can be time-stamped. A similarity threshold can be set dependent on the accuracy required by the application, and the measured fingerprint from each device can be compared with the corresponding fingerprint of any other device connected to or able to connect to the same cell. The devices whose fingerprints differ less than the set threshold are considered as geographically co-located. Time traces of fingerprints can be compared to determine the length of the interaction. For example this can be useful to distinguish between users passing each other and real interacting users. This also averages noise in the measurements and improves accuracy. Information of identified co-located devices can be transmitted to an user application.

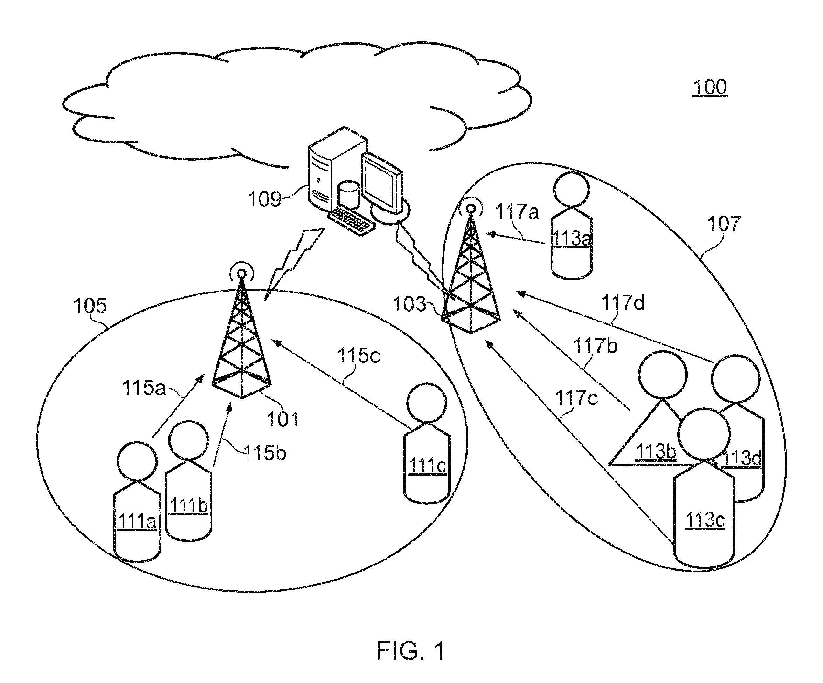

Figure 1 is a schematic representation of a wireless telecommunication network according to an example. Network 100 comprises a number of access points (APs), nodes or base stations 101, 103, which periodically transmit radio signals. Only two APs are shown in figure 1, although it will be appreciated that more or less may be present. An area of radio coverage of an AP is a cell. For example, AP 101 can communicate with UE within cell 105, whilst AP 103 can communicate with UE within cell 107. In an example, an AP can be a WiFi AP, GSM, UMTS or LTE base station, or other RF-based network AP for example. To avoid extra deployment costs and effort, existing radio infrastructures can be used, such as WiFi and Small Cell APs.

Every user's device (UE) periodically measures the radio signals from multiple base stations (RF fingerprints) using typical standardized reporting functions. The most common type of RF measurements is a received signal strength (RSS) measurement, but it can also contain more detailed information such as channel delay profile or phase information. An RF fingerprint is a vector of scanned base station IDs and their associated RF measurements. For performing WiFi RF measurements with existing access points, a data collection application can be executed on the device in question. Small Cell RSS measurements can be collected and reported to the network without requiring such data collection application.

At every time-stamp, every UE reports its RF fingerprint to a location server 109. In an example, these RF fingerprints are not geo-tagged. However, every RF fingerprint is a unique signature of the location of the UE at the time it was measured and recorded. Co-located UEs experience a similar multipath environment (e.g., reflectors and objects in the environment) and therefore exhibit similar multipath profiles. The location server 109 analyzes all received RF fingerprints and compares them against each other. The server 109 clusters the UEs into co-located groups according to the similarity of their RF fingerprints.

Accordingly, the multipath structure of a channel is unique to every location and can be considered as a fingerprint or signature of the location. Therefore, two co-located UEs will typically report a similar RF fingerprint. This is the same property that has been exploited in location fingerprinting (LF) techniques. In LF techniques, a UE's non-geo-tagged RF fingerprint is compared against geo-tagged RF fingerprints that are pre-recorded into the fingerprint database (radio map). The UE is located at the fingerprint that best matches its RF measurements. The fingerprint technique mitigates non line-of-sight (NLoS) effects, and hence can provide accurate positioning information. However the accuracy of LF depends on the density of recorded fingerprints in the radiomap database. Building a radiomap is an expensive and tedious task. With a dense fingerprint database, location estimation with accuracy of 2-3 meter is achievable. Building a radiomap is not an one- time cost because the indoor RF environment can change due to changes in layouts, objects, adding removing or re-locating access points, wireless configuration changes, etc. Furthermore, an outdated radiomap causes errors in location estimation.

According to an example, a UE's fingerprint is compared against other UE's fingerprints to identify co-located UEs. Therefore, the co-localization does not require a fingerprint database. Moreover, as fingerprints that are measured at the same time are compared, accuracy does not suffer from environmental changes. Hence sub-meter accuracy is achievable.

Thus, measured fingerprint vectors from any two devices are compared. In an example, different distance metrics can be applied to measure the distance between fingerprint vectors, whereby to determine a measure of their similarity to one another. For example, the Manhattan distance between fingerprint vectors, in which the sum of the absolute differences of signal strengths can be determined. Euclidian distance is another metric that can be used for classifying the fingerprints.

According to an example, consider that $r_i^A$

and $r_i^B$ denote RSS values from $i$-th access point observed by user (UE) A and B respectively. Fingerprint vectors of devices A and B may include the list of different observed APs. Before applying the distance metric to calculate the similarity between measurements of users A and B, their fingerprint vectors can be formatted into such lists that consist of the same set of APs. Assuming that N common access points are seen by both user A and B, their distance in signal space can be calculated as:

$$D_{A,B} = \frac{1}{N} \sqrt[p]{\sum_{i=1}^{N}(r_i^A - r_i^B)^p}$$

where $p=1$ for a Manhattan distance metric and $p=2$ for Euclidian distance metric. Other distance metrics can be used alternatively as will be appreciated. According to an example, when $D_{A,B}$ is less than a pre-defined threshold of $\delta$, two users A and B are considered co-located. Similarity threshold $\delta$ depends on the accuracy required by the system and the application. For example, it may be desirable to specify that users located in the same room (e.g. 2m resolution) or same floor might be considered co-located. It may also depend on the distance metric used for measuring the similarity. In an example, similarity threshold $\delta$ can be optimized in an offline training phase for the given application and requirements.

According to an example, in order to capture multipath characteristics of a signal, the power-delay-profile (PDP) can be obtained from the Channel State Information (CSI) information. PDP is a more unique signature of a location compared to RSS. Therefore it is more robust to compare PDP fingerprints instead of RSS fingerprints. In common RSS fingerprint methods each base station (BS) only contributes one dimension (signal strength, RSS) in a fingerprint vector. Localization accuracy can be improved by increasing the number of BSs. In an area where there are limited numbers of BSs and resulting low-dimension fingerprint vectors, it is hard to distinguish locations. With the same number of base stations, a PDP fingerprint vector has a higher dimension than a RSS fingerprint vector and hence determining co-location with a much higher accuracy is achievable. In scenarios where performing measurements from neighbouring BSs is not possible or the number of BSs is limited, a PDP fingerprint even from only one base station can specify a location. Thus, PDP fingerprint localization has a minimum requirement for the number of BSs, which is one.

In an example, both active and inactive mobile users can be co-localised. RF measurements of inactive mobile users can be obtained by network based messages that trigger the UE device to perform a measurement and transmit this information. If the location of one user is known, e.g., a user voluntarily reports his location, or location is known because of proximity to a known landmark RF fingerprint, etc., the location of other co-located UEs can be relatively calculated. Over time, by finding the relation of some RF fingerprints to a geographical space, a RF fingerprint database can be automatically constructed without any effort.

With reference to figure 1, multiple UEs are depicted. For example, in cell 105, UEs 111a-c are present. In cell 107, UEs 113a-d are present. In cell 105, UEs 111a, 111b are co-located, whereas UE 111c is not co-located with these two UEs. Respective RF fingerprints 115a-c from UEs 111a-c are determined at the UEs and transmitted to AP 101 which can forward the fingerprints to server 109. Alternatively, the fingerprint data can be transmitted directly from the UEs to the server 109. In the example of figure 1, respective RF fingerprints of the UEs 111a-c can be determined using radio measurements at the UEs from the Aps 101, 103.

Similarly, in cell 107, UEs 113b, 113c and 113d are co-located, whilst UE 113a is not considered co-located with any of these UEs. Respective RF fingerprints 117a-d are provided by the UEs 113a-d based on radio measurements at the UEs similarly to that noted above.

In an example, an AP or node 101, 103 can include a server 109. That is, the server 109 may not be physically remote from APs and can be provided at the same location as or as part of an AP for example.

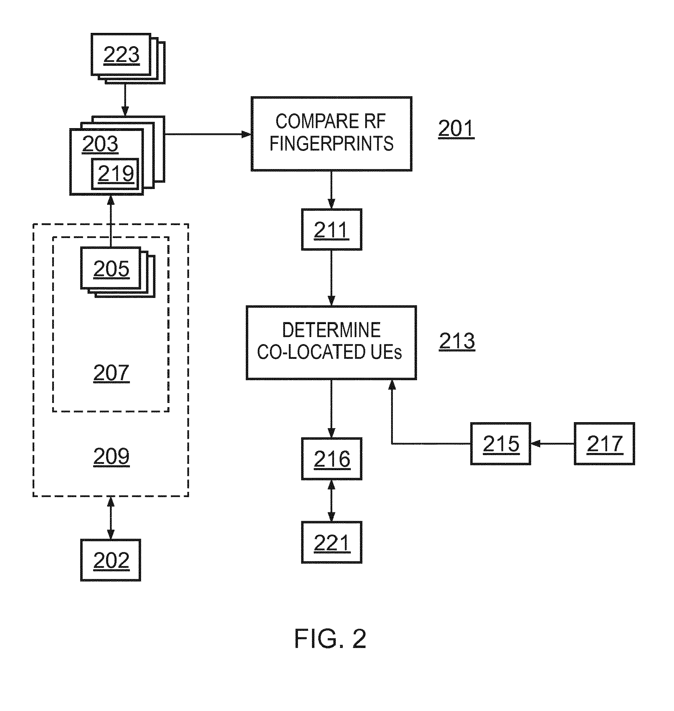

Figure 2 is a flowchart of a method according to an example. More particularly, a method for determining the relative position of user equipment in a wireless telecommunication network is depicted. At block 201 RF fingerprints 203 of respective multiple UEs 205 within a cell 207 of the network 209 are compared to determine a measure 211 of their similarity to one another.

At block 213, co-located UEs within the cell 207 are determined using a similarity metric 215 representing a predetermined similarity threshold 217 to generate a set of co-located UEs 216 with respective RF fingerprints that differ by a factor which is less than the similarity threshold 217.

An RF fingerprint 203 of a UE can be periodically updated by measuring the signal strength at the UE of access points of network 209 within range of the UE in question. In an example, Respective RF fingerprints 203 can be transmitted from UEs 205 to a location server 202 of the network 209. An RF fingerprint 203 can include a timestamp 219 indicating the time at which the fingerprint was created, and a time trace of an RF fingerprint representing the period of time that the RF fingerprint is stable or varies within a predetermined range can therefore be determined. For example, the difference between the earliest and latest time within which an RF fingerprint remains substantially stable, such as having not varied outside of the similarity threshold, can indicate the length of time that the UE which produced the RF fingerprints in question has remained in or around a given location. Data 221 representing the identity of a UE can be transmitted to at least one co-located UE.

In an example, an RF fingerprint 203 for a UE 205 is a vector of scanned access point identifications and associated RF measurements at the UE. Comparing RF fingerprints of respective multiple UEs within a cell of the network at block 201 to determine a measure of their similarity to one another can include comparing an RF measurement for a given access point at one UE with a corresponding RF measurement for the access point at another UE to determine a measure for the deviation in the respective measurements from one another. Generating a set of co-located UEs with respective RF fingerprints that differ by a factor which is less than the similarity threshold at block 216 can include selecting respective pairs of UEs for which the deviation in respective measurements of RF measurements for a given access point is the less or equal to predetermined similarity threshold. An RF fingerprint 203 can include data 223 representing the received signal strength (RSS) at a UE from at least one access point of the network or can include data representing a power delay profile obtained from channel state information for example.

Thus, location server 202 can calculate the distance between fingerprints from every two devices, $D_{j,k}$ from a set of multiple devices, and accordingly detect co-located users.

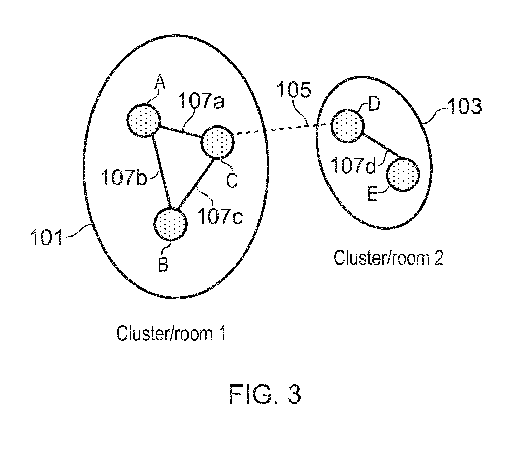

According to an example, co-located users can be clustered. Figure 3 is a schematic representation of clusters of users according to an example. In the example of figure 3, users (UEs) A, B and C are clustered in cluster/room 1, 101 and users D and E are clustered in cluster/room 2, 103. User E is detected to be in another room (room 2, 103), but there may be uncertainty as to whether users D and C are in the same room or not (represented by dashed line 105) due to their relatively close proximity to one another, which means that the RF fingerprints of the devices C and D will likely be similar.

Thus, in the example of figure 3, user D's measurement is similar to that of users E and C, however there is no similarity between user D's measurement and measurements from users A and B. This uncertainty may happen for users located in adjacent rooms. The measurement from users D and C, who are located in the border of room 1 and 2, may represent similarity. This error in co-location detection may be also due to a non-optimized value for a similarity threshold δ or noise of the measurements.

According to an example, to correct such an error, the distance (in signal space) between every two users $i$ and $j$ can be calculated, $D_{j,k}$. If $D_{j,k}$ is less than δ, it is translated to a connection of users $i$ and $j$. Figure 3 depicts the connectivity graph of nodes A-E. The connection between nodes $i$ and $j$ are defined as edges 107a-d between two nodes where the edge weight is $D_{j,k}$. Accordingly, a connectivity matrix can be used to represent the similarity of each node pair measurement. In an example, the connectivity matrix is a symmetric matrix.

For the example of figure 3, the connectivity matrix is:

$$\begin{bmatrix} 0 & D_{A,B} & D_{A,C} & D_{A,D} & D_{A,E} \\ \cdots & 0 & D_{B,C} & D_{B,D} & D_{B,E} \\ \cdots & \cdots & 0 & D_{C,D} & D_{C,E} \\ \cdots & \cdots & \cdots & 0 & D_{D,E} \end{bmatrix}$$

There is an uncertainty as to whether users D and C belong in room 1 (101) or room 2 (103). To remove this uncertainty, a modularity metric can be used to cluster the nodes. The modularity is a metric for community detection, and is a measure of the density of connections within a cluster and between different clusters. Optimal clustering divides the nodes into clusters such that the modularity metric is maximized, i.e., number of edges within every cluster is maximized and number of edges between the clusters is minimized. Thus, in the example shown in Figure 3, modularity is maximized when C belongs to cluster/room1 (101) and D belongs to cluster/room2 (103).

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for determining the relative position of user equipment in a wireless telecommunication network, the method comprising:

   comparing RF fingerprints of respective multiple UEs within a cell of the network to determine a measure of their similarity to one another; and determining co-located UEs within the cell using a similarity metric representing a predetermined similarity threshold to generate a set of co-located UEs with respective RF fingerprints that differ by a factor which is less than the similarity threshold.

2. A method as claimed in claim 1, wherein an RF fingerprint of a UE is updated periodically by measuring the signal strength at the UE of access points within range of the UE.

3. A method as claimed in claim 1 or 2, wherein respective RF fingerprints are transmitted to a location server of the network.

4. A method as claimed in any preceding claim, wherein an RF fingerprint includes a timestamp indicating the time at which the fingerprint was created.

5. A method as claimed in claim 4, further including determining the time trace of an RF fingerprint representing the period of time that the RF fingerprint is stable or varies within a predetermined range.

6. A method as claimed in any preceding claim, wherein data representing the identity of a UE is transmitted to at least one co-located UE.

7. A method as claimed in any preceding claim, wherein an RF fingerprint for a UE is a vector of scanned access point identifications and associated RF measurements at the UE.

8. A method as claimed in claim 7, wherein comparing RF fingerprints of respective multiple UEs within a cell of the network to determine a measure of their similarity to one another further includes comparing an RF measurement for a given access point at one UE with a corresponding RF measurement for the access point at another UE to determine a measure for the deviation in the respective measurements from one another.

9. A method as claimed in claim 8, wherein generating a set of co-located UEs with respective RF fingerprints that differ by a factor which is less than the similarity threshold includes selecting respective pairs of UEs for which the deviation in respective measurements of RF measurements for a given access point is the less or equal to predetermined similarity threshold.

10. A method as claimed in any preceding claim, wherein an RF fingerprint includes data representing the received signal strength (RSS) at a UE from at least one access point of the network or includes data representing a power delay profile obtained from channel state information.

11. A method as claimed in any preceding claim, further including clustering the multiple UEs in clusters of co-located devices.

12. A node in a wireless telecommunications system including a location server operable to:

receive RF fingerprint data from multiple UEs within a cell of the system;
process the fingerprint data to compare RF fingerprints of respective ones of the multiple UEs to determine a measure of their similarity to one another; and
determine co-located UEs within the cell using a similarity metric representing a predetermined similarity threshold to generate a set of co-located UEs with respective RF fingerprints that differ by a factor which is less than the similarity threshold.

13. A node as claimed in claim 12, wherein the location server is further operable to determine a time trace of an RF fingerprint representing the period of time that the RF fingerprint is stable or varies within a predetermined range using RF fingerprint timestamps indicating the time at which the fingerprint was created.

14. A node as claimed in claim 11 or 12, wherein the node is operable to transmit data to a UE indicating the identity of at least one co-located UE.

15. A computer program product, comprising a computer usable medium having computer readable program code embodied therein, said computer readable program code adapted to be executed to implement a method for determining the relative position of user equipment in a wireless telecommunication network as claimed in any of claims 1 to 11.

FIG. 1

EP 3 001 215 A1

EP 3 001 215 A1

FIG. 2

9

FIG. 3

Europäisches
Patentamt

European
Patent Office

Office européen
des brevets

# EUROPEAN SEARCH REPORT

Application Number

EP 14 30 6470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 830 909 B1 (OCTEAU DAMIEN [US] ET AL) 9 September 2014 (2014-09-09) <br> * column 1, line 39 - line 52 * <br> * column 2, line 35 - line 55 * <br> * column 5, line 13 - column 10, line 9 * <br> ----- | 1-15 | INV. <br> G01S5/02 |
| X | US 2009/023410 A1 (GHOSH RIDDHIMAN [US]) 22 January 2009 (2009-01-22) <br><br> * paragraph [0005] * <br> * paragraph [0019] - paragraph [0024] * <br> * paragraph [0028] - paragraph [0031] * <br> * paragraph [0034] - paragraph [0051] * <br> ----- | 1,3, 6-12,14, 15 | |

TECHNICAL FIELDS
SEARCHED      (IPC)

G01S
H04W

The present search report has been drawn up for all claims

| Place of search | Date of completion of the search | Examiner |
|---|---|---|
| Berlin | 30 July 2015 | López Pérez, Mariano |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
.......................................................................................
& : member of the same patent family, corresponding
     document

EPO FORM 1503 03.82 (P04C01)

**EP 3 001 215 A1**

## ANNEX TO THE EUROPEAN SEARCH REPORT
## ON EUROPEAN PATENT APPLICATION NO.

EP 14 30 6470

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2015

| Patent document cited in search report | | Publication date | Patent family member(s) | Publication date |
|---|---|---|---|---|
| US 8830909 | B1 | 09-09-2014 | NONE | |
| US 2009023410 | A1 | 22-01-2009 | NONE | |

For more details about this annex : see Official Journal of the European Patent Office, No. 12/82